# EUROPÄISCHE PATENTSCHRIFT

(11) **EP 2 302 432 B1**
(45) Veröffentlichungstag und Bekanntmachung des Hinweises auf die Patenterteilung: **01.05.2013**
(21) Anmeldenummer: 10178157.3
(22) Anmeldetag: 22.09.2010
(51) Int. Cl.: G02B 7/00, G02B 7/02

(54) **Vorrichtung zur temperaturabhängigen axialen Verschiebung optischer Komponenten**
Device for temperature-dependent axial movement of optical components
Dispositif de déplacement axial en fonction de la température de composants optiques

(30) Priorität: 25.09.2009 DE 102009043161
(43) Veröffentlichungstag der Anmeldung: 30.03.2011
(73) Patentinhaber: JENOPTIK Optical Systems GmbH, 07745 Jena (DE)
(72) Erfinder: Reichmann, Lutz, 07743, Jena (DE); Seeland, Tobias, 98693, Ilmenau (DE)
(74) Vertreter: Schaller, Renate

(56) Entgegenhaltungen:
- EP-A1- 0 564 376
- EP-A1- 1 586 927
- JP-A- 57 208 516
- JP-A- 58 203 405
- US-A1- 2005 069 376

## Beschreibung

Die Erfindung betrifft eine Vorrichtung, in der innerhalb einer feststehenden Halterung eine gefasste optische Komponente, wie eine Linse oder Linsengruppe, temperaturabhängig axial verschoben wird. Eine derartige gattungsgemäße Vorrichtung ist aus der US 4,162,120 bekannt.

Optisch abbildende Systeme sind temperaturempfindlich.
Durch den Temperatureinfluss verändert sich sowohl die Geometrie als auch die Brechzahl des Werkstoffs optischer Komponenten. Insbesondere für Linsen, deren Dicke, Radius und Brechzahl für die Abbildung bestimmend ist, können Temperaturschwankungen die Abbildungsqualität erheblich beeinflussen. Auch wird ein optisches System durch eine Wärmeausdehnung der die optischen Komponenten zueinander haltenden Fassungsteile beeinflusst.

In diesem Zusammenhang sind verschiedene Ansätze bekannt geworden, um den Einfluss der Temperatur auf optische Komponenten und daraus gebildete optische Systeme zu kompensieren.

Ein Ansatz besteht darin, die einzelnen optischen Komponenten und Fassungsteile gezielt aus Werkstoffen unterschiedlicher Ausdehnungskoeffizienten herzustellen und diese so miteinander zu kombinieren, dass sich deren Ausdehnungskoeffizienten gegenläufig verhalten. Insbesondere sind derartige Baugruppen bestehend aus mehreren Linsen bekannt. Diese Art Temperaturkompensation ist auf nur kleine Temperaturbereiche beschränkt.

Ein anderer Ansatz besteht darin, dass die Änderung der Abbildungseigenschaften eines optischen Systems, die sich insbesondere in einer Veränderung der Fokuslänge begründen, kompensiert werden, indem die hierfür besonders relevanten optischen Komponenten innerhalb des optischen Systems verschoben werden.
Dazu sind grundsätzlich ein äußeres, mit einem Gehäuse des optischen Systems verbundenes Fassungsteil und ein inneres Fassungsteil, welches die optische Komponente trägt, vorhanden, wobei die beiden Fassungsteile koaxial zueinander angeordnet eine gemeinsame Achse aufweisen, entlang der die optische Komponente verschoben wird.

Als Mittel für die Verschiebung sind unterschiedliche technische Lösungen bekannt, die sich hauptsächlich darin unterscheiden, ob die Verschiebung aktiv oder passiv erfolgt.

Für eine aktive Verschiebung ist es bekannt, über Temperatursensoren Aktuatoren zu steuern, wie beispielsweise einen Motor mit Zahnstangenantrieb, mit Spindelantrieb oder einem Piezoantrieb. Auf diese Weise kann man zwar große Stellkräfte und lange Verfahrwege realisieren, jedoch dies nur unter Inkaufnahme eines erheblichen Einbauraumes. Ferner benötigen derartige Vorrichtungen eine Stromversorgung, was für viele optische Systeme nicht praktikabel ist.

Aus der DE 10 2006 046 416 B4 ist eine Vorrichtung bekannt, bei der eine passive Verschiebung mittels einer Zylinder-Kolben-Anordnung realisiert wird.
Das äußere Fassungsteil ist hier als gehäusefester Zylinder ausgebildet, während das innere Fassungsteil, welches eine optische Komponente trägt, einen Kolben darstellt. Der Zylinder und der Kolben sind gegeneinander abgedichtet und schließen miteinander über eine vorgegebene Länge eine mit einem Fluid gefüllte Kammer ein. In Abhängigkeit vom Temperaturkoeffizienten des Fluides und der Länge der Kammer wird der Kolben in axialer Richtung innerhalb des Zylinders verschoben, wenn sich die Temperatur des Fluides ändert. Um also eine von der Temperaturänderung abhängige bestimmte Verschiebung der optischen Komponente zu bewirken, muss abhängig vom Temperaturkoeffizienten des verwendeten Fluides eine bestimmte Länge für die Kammer vorgegeben werden.
Nachteilig an dieser Lösung ist, dass das Übersetzungsverhältnis zwischen der Ausdehnung des Fluides und dem Verstellweg nur 1:1 ist und nur bei einer großen Kammerlänge und damit großen Baulänge auch ein möglicher Verstellbereich erreicht wird, wie er für größere Temperatureinsatzbereiche erforderlich ist. Als Fluid soll ein reaktives Polymersystem verwendet werden, das im ungehärteten Zustand flüssig ist und im gehärteten Zustand eine gelartige bis elastomere Konsistenz aufweist. Für optische Systeme, die mit EUV-Strahlung (Extremultraviolett) arbeiten, ist eine derartige Vorrichtung nicht geeignet, da zur Vermeidung von Kontaminationen die Verwendung organischer Substanzen ausgeschlossen ist.

Aus der US 5,557,474 ist eine Vorrichtung zur passiven thermischen Kompensation beschrieben, bei der zwei Linsen in Abhängigkeit von der Temperaturänderung gegeneinander verschoben werden, um gemeinsam wirkend eine temperaturabhängige Änderung der Abbildung auszugleichen.
Um eine temperaturabhängige Fokuslagenänderung eines Systems, bestehend aus zwei Einzellinsen, auszugleichen, soll der Abstand der beiden Linsen zueinander entlang der optischen Achse um 0,007 Inch (0,17 mm) pro 30° Temperaturänderung verschoben werden.
Zu diesem Zweck sind zwischen den beiden Linsen Abstandsringe eingebracht, die abwechselnd angeordnet aus Werkstoffen unterschiedlicher Ausdehnungskoeffizienten bestehen und zueinander keilförmige Planflächen aufweisen. Je nachdem, ob die Abstandsringe mit den nach außen zulaufenden Keilflächen oder die Abstandsringe mit den nach innen zulaufenden Keilflächen den größeren Ausdehnungskoeffizienten aufweisen, wird der Abstand zwischen den Linsen bei einer Temperaturerhöhung verringert oder vergrößert.
Das Maß der Änderung ergibt sich aus der Anzahl der Abstandsringe, deren Keilwinkel und Radien sowie der Differenz der Temperaturkoeffizienten der Werkstoffe.
Da die radiale Ausdehnung der Abstandsringe proportional deren Radius ist und der Radius gleich dem der Linsen zu wählen ist, ist eine derartige Vorrichtung nur für große optische Systeme, d. h. Linsen mit einem großen Durchmesser geeignet. Eine überschlägige Rechnung zeigt: geht man von einem Winkel der Keilflächen von 2 x 45° aus, d. h. beide Seiten des Ringes sind keilförmig ausgebildet, und die Differenz der Ausdehnungskoeffizienten beträgt 23 x 10⁻⁶ K⁻¹, so benötigt man für die angestrebte Kompensationswirkung einen Ring mit einem Durchmesser von 236 mm. Da bei einem Keilwinkel von 45° mit funktionsbehindernder Reibung zu rechnen ist, wird bei üblichen Reibwerten eine Mehrzahl solcher Ringe erforderlich sein. Grundsätzlich weist diese Lösung den Nachteil auf, dass infolge der Festkörperreibung der Stick-Slip-Effekt unvermeidlich ist, was die Reproduzierbarkeit deutlich beeinträchtigt und bei sehr kleinen Temperaturschwankungen die Funktion ganz verhindert.

Aus der EP 0 604 328 A1 ist eine optische Anordnung bekannt, die über einen großen Temperaturbereich einen kollimierten Lichtstrahl gleicher Qualität liefert, indem ein thermisches Kompensationsmittel zwischen der Fassung der optischen Komponente zur Kollimierung und der Halterung der Lichtquelle angeordnet ist. Das thermische Kompensationsmittel kann ein Kompensationsring, gebildet durch ein Laminat von Schichten, in denen Faserbündel unter einem unterschiedlichen Winkel gewickelt sind, sein. Diese Anordnung ist für die Verwendung im EUV-Bereich ungeeignet, da sie üblicherweise als Verbundwerkstoff die Verwendung einer organischen Matrix erfordert, was bei Anwendungen im EUV-Bereich, zur Vermeidung von Kontaminationen, grundsätzlich auszuschließen ist.

Auch aus der US 4,162,120 ist eine thermische Kompensationsvorrichtung bekannt, die eine lineare Bewegung infolge von Temperaturänderungen bewirkt und in optischen Systemen eingesetzt werden kann.
Im Vergleich zum hier beschriebenen Stand der Technik sollen große Temperaturänderungen kompensiert werden, indem eine Gliederkette aus mehreren ausgedehnten Gliedern zweier Typen gebildet wird, die einen unterschiedlichen thermischen Ausdehnungskoeffizienten haben.

Der erste Typ der Glieder besteht aus einem Werkstoff mit einem relativ hohen thermischen Ausdehnungskoeffizienten, wie Aluminium oder Magnesium, während der zweite Typ der Glieder aus einem Werkstoff mit einem relativ geringen thermischen Ausdehnungskoeffizienten wie Kovar oder Invar besteht.
Die Glieder sind wechselweise angeordnet und jeweils an den Enden miteinander verbunden, um eine gefaltete Gliederkette zu bilden. Jeweils ein Glied mit einem geringen und ein mit diesem verbundenes Glied mit einem hohen Ausdehnungskoeffizienten sollen zum besseren Verständnis als ein Gliederpaar verstanden werden.
Zur Verwendung in einem optischen System sind z. B. drei derartige Gliederketten, jeweils bestehend aus einer vorgegebenen, gleichen Anzahl von Gliederpaaren, mit einem Ende an einer festen Halterung und dem anderen Ende an einer beweglichen Linsenfassung angebracht.

Durch die Faltung addieren sich die bei Temperaturänderung entstehenden Längendifferenzen zwischen den beiden Gliedern jeweils eines Gliederpaares auf.
Damit wird eine Längenverschiebung, gleich der Differenz der Gesamtlänge aller Glieder ersten Typs abzüglich der Gesamtlänge aller Glieder zweiten Typs, möglich.
Ein vergleichbare Kompensationsvorrichtung ist aus der EP 1 586 927 A 1 bekannt.
Hier ist wie in der vorbenannten US 4,162,120 eine thermische Kompensationsvorrichtung beschrieben, die eine lineare Bewegung (Kompensationsweg) infolge von Temperaturänderungen bewirkt und somit in optischen Systemen insbesondere zur Fokuslagenkorrektur eingesetzt werden kann. Die Kompensationsvorrichtung ist über einen äußeren Ring mit einem Gehäuse und über einen inneren Ring mit einer optischen Linse verbunden. Dazwischen sind vergleichbar mit der vorbenannten US 4,162,120 erste und zweite Ringe mit unterschiedlichem Ausdehnungskoeffizienten im Wechsel umeinander koaxial angeordnet und an ihren Enden miteinander verbunden, womit eine Wirkungskette gebildet wird.
Nachteilig an den beiden vorbenannten Lösungen ist der hohe Montageaufwand und die Gefahr einer Verkippung der Linse aufgrund von Toleranzen zwischen den einzelnen Gliederketten. Demzufolge muss die Linse bzw. das optische Element durch eine separate axiale Führung gehalten werden. Der erreichbare Kompensationsweg wird durch die Anzahl der am Umfang platzierbaren Elemente, d. h. den effektiven Durchmesser der Anordnung limitiert. Eine weitere Erhöhung des Kompensationsweges je Kelvin (K) Temperaturänderung ist nur durch eine größere Länge der Glieder erreichbar. Hieraus ergibt sich ein erheblicher Platzbedarf. Die Ausnutzung des verfügbaren Bauraumes ist ungünstig. Durch die Verwendung von Gliederketten ergibt sich in Längsrichtung eine geringe Steifigkeit der Anordnung, da die einzelnen Glieder bei axialer Belastung auf Biegung beansprucht werden. Die Nachgiebigkeit summiert sich über alle Glieder. Für eine veränderliche Lage des optischen Systems im Raum wäre eine höhere Ungenauigkeit der axialen Position der Linse zu erwarten. Ebenso nachteilig ist die, infolge der verminderten Steifigkeit, geringere Eigenfrequenz in Längsrichtung.

Der Erfindung liegt die Aufgabe zugrunde, eine Vorrichtung zur temperaturabhängigen, verkippungsfreien axialen Verschiebung einer optischen Komponente gegenüber einer feststehenden Halterung zu schaffen, die montagefreundlich herstellbar ist und für optische Systeme kurzer Baulängen, insbesondere solcher, die mit EUV-Strahlung betrieben werden, vorteilhaft ist. Hierbei werden bei einem möglichst geringen Bauraum, z. B. bei einem Außendurchmesser von 70 mm und einer Länge von 20 mm, Kompensationskoeffizienten in einer Größenordnung von ca. 10 µm/K angestrebt.

Diese Aufgabe wird durch eine Vorrichtung mit den Merkmalen des Anspruches 1 gelöst.
Vorteilhafte Weiterbildungen sind in den Unteransprüchen beschrieben.

Gleich dem Stand der Technik weist eine erfindungsgemäße Vorrichtung zur temperaturabhängigen axialen Verschiebung einer optischen Komponente eine feststehende Halterung mit einer Achse A auf, entlang der eine die optische Komponente tragende Fassung verschiebbar ist. Die feststehende Halterung und die verschiebbare Fassung sind über einen Verschiebemechanismus miteinander verbunden, der aus Bauteilen mit unterschiedlichen thermischen Ausdehnungskoeffizienten besteht. Erfindungsgemäß ist eine monolithische Fassungseinheit vorhanden, mit einem äußeren Fassungsteil, das die feststehende Halterung darstellt, und einem inneren Fassungsteil, das die Fassung für die optische Komponente bildet.
Die Bauteile des Verschiebemechanismus umfassen wenigstens einen äußeren Dehnungskörper aus einem Werkstoff mit einem vergleichsweise höheren thermischen Ausdehnungskoeffizienten sowie wenigstens einen inneren Dehnungskörper aus einem Werkstoff mit einem vergleichsweise niedrigeren thermischen Ausdehnungskoeffizienten.
Jeweils ein äußerer Dehnungskörper und ein innerer Dehnungskörper sind über eine Anzahl sternförmig angeordneter Verbindungsglieder miteinander verbunden und die Verbindungsglieder sind unter einem vorgegebenen Anstellwinkel zur Achse A angeordnet, der ungleich 90° ist.

Anhand der Zeichnung wird die Vorrichtung im Folgenden beispielhaft näher erläutert. Es zeigen:
- Fig. 1: eine perspektivische Schnittdarstellung eines ersten Ausführungsbeispiels
- Fig. 2: eine Explosionsdarstellung des ersten Ausführungsbeispiels
- Fig. 3: ein Funktionsschema für das erste Ausführungsbeispiel
- Fig. 4: ein Funktionsschema für ein zweites Ausführungsbeispiel

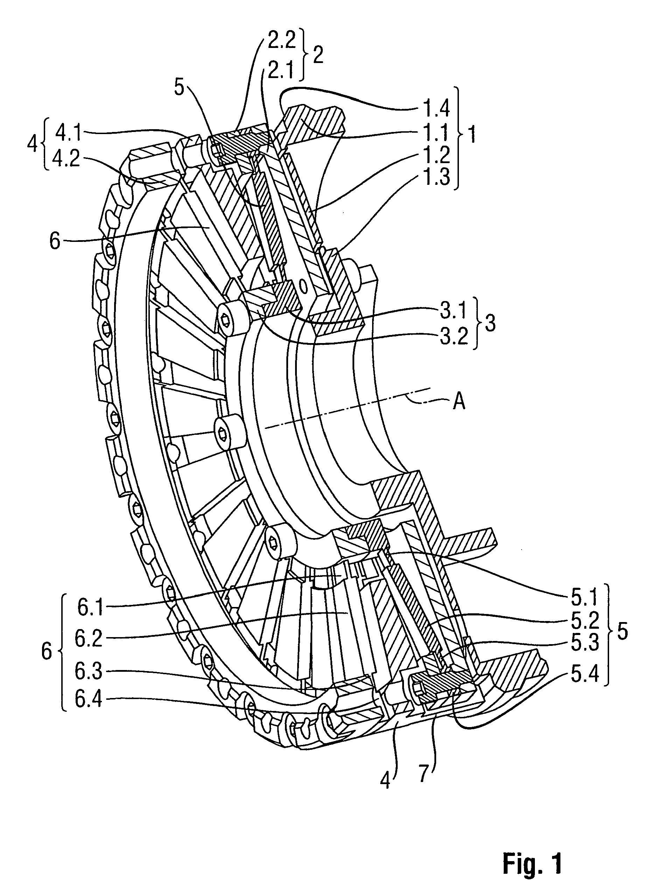

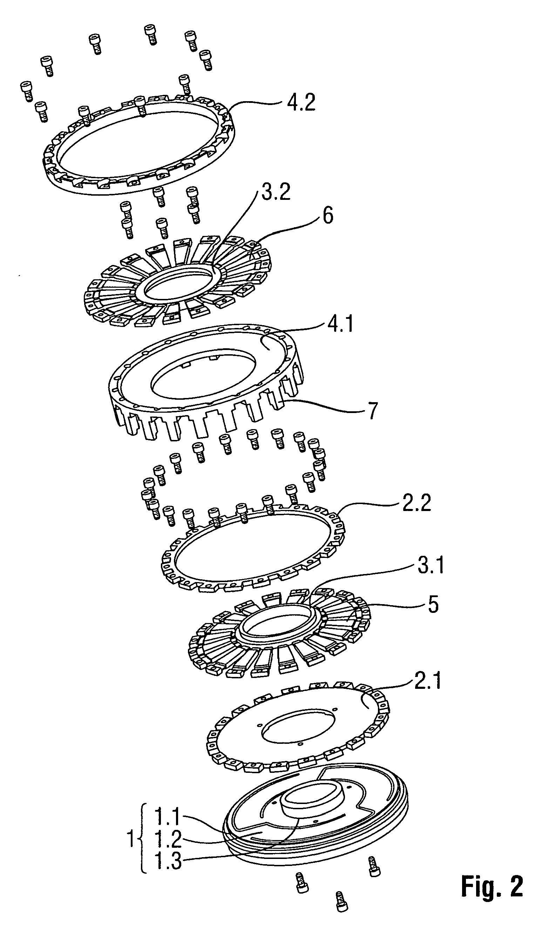

Ein bevorzugtes, erstes Ausführungsbeispiel ist in den Fig. 1 und 2 dargestellt.
Die hier gezeigte Vorrichtung besteht im Wesentlichen aus auf einer gemeinsamen Achse A angeordneten Bauteilen, nämlich einer Fassungseinheit 1, einem ersten und zweiten äußeren Dehnungskörper 2, 4, einem inneren Dehnungskörper 3, einer Anzahl von ersten und zweiten Verbindungsgliedern 5, 6 sowie einem Distanzkörper 7. Der Werkstoff für die Dehnungskörper 2, 3, 4 ist so ausgewählt, dass der thermische Ausdehnungskoeffizient des ersten und zweiten äußeren Dehnungskörpers 2, 4 möglichst groß ist im Vergleich zum thermischen Ausdehnungskoeffizienten des inneren Dehnungskörpers 3, wodurch ein radialer Dehnungsunterschied bewirkt wird.
Vorteilhaft wird für den ersten und zweiten äußeren Dehnungskörper 2, 4 Messing, Stahl oder Aluminium und für den inneren Dehnungskörper 3 Invar verwendet.
Der Werkstoff für die Fassungseinheit 1 weist einen thermischen Ausdehnungskoeffizienten auf gleich dem des Werkstoffes der äußeren Dehnungskörper 2, 4 und ist bevorzugt ein gleicher Werkstoff.

Bei der Fassungseinheit 1 handelt es sich um ein geschlitztes monolithisches Bauteil, das durch Schlitze begrenzt in ein äußeres Fassungsteil 1.1, ein inneres Fassungsteil 1.3 und radial zwischen den Schlitzen gebildete Verbindungsteile 1.2 unterteilt ist.
Das äußere Fassungsteil 1.1 stellt eine feststehende Halterung dar, d. h. die Fassungseinheit 1 ist über das äußere Fassungsteil 1.1 z. B. mit dem Gehäuse 9 eines optischen Systems (hier nicht dargestellt) verbunden. Demgegenüber ist eine axiale Verschiebung des inneren Fassungsteils 1.3, das als Fassung für eine optische Komponente 8 (hier nicht dargestellt) dient, möglich. Den Übergang zwischen dem äußeren Fassungsteil 1.1 und den Verbindungsteilen 1.2 sowie zwischen den Verbindungsteilen 1.2 und dem inneren Fassungsteil 1.3 stellen Festkörpergelenke 5.1, 5.3 bzw. 6.1, 6.3 dar, weshalb eine axiale Verschiebung des inneren Fassungsteils 1.3 gegenüber dem äußeren Fassungsteil 1.1 reibungsfrei und ohne Stick-Slip-Effekt vonstatten geht.

In Fig. 2 ist erkennbar, dass das äußere und das innere Fassungsteil 1.1, 1.3 der Fassungseinheit 1 über drei Verbindungsteile 1.2 miteinander verbunden sind, die jeweils durch Schlitze begrenzt sind.

Die beschriebene Fassungseinheit 1 ist nicht neu und es ist eine Vielzahl von gattungsgleichen Fassungseinheiten bekannt, die sich durch die Geometrie und Lage der Schlitze und damit gebildeten Verbindungsteile 1.2 unterscheiden. Die dargestellte Schlitzführung soll daher auch nur ein Beispiel für eine mögliche Ausführung sein und die Erfindung nicht hierauf begrenzen.
Anstelle mit nur einer Fassungseinheit 1 könnte die optische Komponente 8 auch durch zwei axial hintereinander angeordnete Fassungseinheiten 1 gehalten sein, was eine mögliche Verkippung sicher ausschließt und somit zur Verbesserung der Führungseigenschaften führt.

Über die konstruktive Ausführung der Verbindungsteile 1.2 ist abgesichert, dass sich das innere Fassungsteil 1.3 und damit die hier eingebrachte optische Komponente 8 nicht radial zur Achse A verschieben kann, eine axiale Verschiebung entlang der Achse A aber möglich ist. Bei der Verwendung nur einer Fassungseinheit 1 wird die erforderliche Führung gegen Verkippen durch eine hohe radiale Steifigkeit der die Dehnungskörper 2, 3, 4 miteinander verbindenden Verbindungsglieder 5, 6 erreicht.

Die Achse A ist die mechanische Achse der Fassungseinheit 1, zu der alle nachfolgend angeordneten Bauteile so angeordnet sind, dass deren mechanische Achsen mit der Achse A zusammenfallen.

Die optische Komponente 8 ist im inneren Fassungsteil 1.3 so eingesetzt, dass deren optische Achse mit der Achse A zusammenfällt.

Alle über die Fassungseinheit 1 hinaus vorhandenen Bauteile der Vorrichtung bilden gemeinsam einen Mechanismus, über den das äußere und das innere Fassungsteil 1.1, 1.3 der Fassungseinheit 1, außer über die Verbindungsteile 1.2, zusätzlich miteinander in Verbindung stehen, und der in Abhängigkeit von Temperaturänderungen die axiale Verschiebung bewirkt, nachfolgend Verschiebemechanismus genannt.

Wesentlich für die Funktion des Verschiebemechanismus ist, dass die Verbindungsglieder 5, 6 mit ihren inneren Enden mit dem inneren Dehnungskörper 3 verbunden sind, während sie mit ihren äußeren Enden 5.4, 6.4 mit dem ersten bzw. zweiten äußeren Dehnungskörper 2, 4 in Verbindung stehen. Für eine radiale Verschiebung der Dehnungskörper 2, 3, 4 zueinander, weisen die Verbindungsglieder zwei radial steife Gelenke auf, die gemäß dem ersten Ausführungsbeispiel vorteilhaft als Festkörpergelenke 5.1, 5.3, 6.1, 6.3 ausgeführt sind.

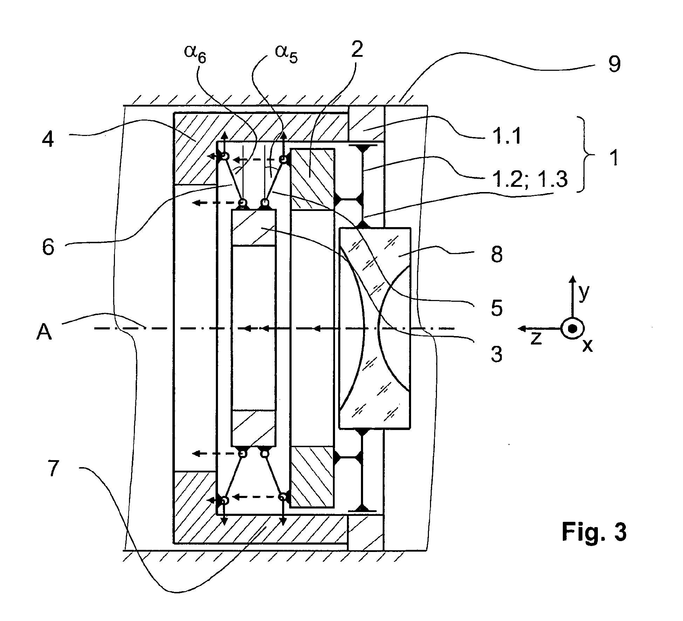

Zum einfachen Verständnis der Funktionsweise der Vorrichtung ist in Fig. 3 ein Funktionsschema für das erste Ausführungsbeispiel dargestellt. Die in Fig. 3 dargestellten Funktionsbilder sind mit den gleichen Bezugszeichen gekennzeichnet, wie die zuzuordnenten Bauteildarstellungen in den Fig. 1 und 2.

Wie bereits erläutert, ist die Fassungseinheit 1 über ihr inneres Fassungsteil 1.3 fest mit einer optischen Komponente 8 und über ihr äußeres Fassungsteil 1.1 fest mit einem Gehäuse 9 eines optischen Systems verbunden. Das innere und das äußere Fassungsteil 1.3, 1.1 sind durch Verbindungsteile 1.2 miteinander verbunden, die eine begrenzte axiale Verschiebung der beiden Fassungsteile 1.1, 1.3 zueinander in Richtung der Achse A gestatten.

Der Verschiebemechanismus, der mit einem freien Ende mit dem inneren Fassungsteil 1.3 und mit einem anderen freien Ende mit dem äußeren Fassungsteil 1.1 in Verbindung steht, besteht vom Funktionsprinzip her aus einem Hebelgetriebe, gebildet aus drei Dehnungskörpern 2, 3, 4, die durch eine Vielzahl von gleichen Doppelschwingen, jeweils gebildet durch erste und zweite Verbindungsglieder 5, 6, miteinander verbunden sind. Dabei schließen die ersten Verbindungsglieder 5 einen positiven Anstellwinkel α₅ und die zweiten Verbindungsglieder 6 einen negativen Anstellwinkel α₆ mit einer Senkrechten zur Achse A ein.
Die Anstellwinkel α₅, α₆ führen in Verbindung mit einer sternförmigen, radialsymmetrischen Anordnung einer Vielzahl solcher Doppelschwingen zu einer Übersetzung der radialen Dehnungsunterschiede in eine axiale Bewegung. Radiale Kräfte gegenüberliegender Doppelschwingen heben sich stets gegenseitig auf.
Der innere Dehnungskörper 3 besteht zweigeteilt aus einem ersten Innenring 3.1 und einem mit diesem fest verbundenen zweiten Innenring 3.2, wobei der erste Innenring 3.1 mit den ersten Verbindungsgliedern 5 und der zweite Innenring 3.2 mit den zweiten Verbindungsgliedern 6 jeweils als ein monolithisches Bauteil ausgebildet sind.
Der innere Dehnungskörper 3 könnte auch einteilig mit allen Verbindungsgliedern 5, 6 als ein monolithisches Bauteil ausgebildet sein, was allerdings fertigungstechnisch schwerer zu beherrschen wäre.

Durch die monolithische Ausführung bestehen zwangsläufig die Verbindungsglieder 5, 6 und der innere Dehnungskörper 3 aus einem gleichen Werkstoff.
Die Verbindungsglieder 5, 6 sind jeweils aus einem inneren Festkörpergelenk 5.1, 6.1, einem Steg 5.2, 6.2, einem äußeren Festkörpergelenk 5.3, 6.3 sowie einem äußeren Ende 5.4, 6.4 gebildet.
Der erste äußere Dehnungskörper 2 ist aus einem ersten und einem zweiten Außenring 2.1, 2.2 und der zweite äußere Dehnungskörper 4 ist aus einem dritten und einem vierten Außenring 4.1, 4.2 gebildet, um jeweils zwischen den Außenringen 2.1 und 2.2 bzw. 4.1 und 4.2 die äußeren Enden 5.4 bzw. 6.4 zu klemmen, womit eine feste Verbindung zwischen den Verbindungsgliedern 5, 6 und dem ersten bzw. zweiten äußeren Dehnungskörper 2, 4 geschaffen wird. Die Klemmung erfolgt vorteilhaft über Schraubverbindungen. Diese Verbindungen weisen aufgrund nur minimaler Kontaktflächen auch nur geringe radiale Ausdehnungsdifferenzen auf, womit Verspannungen infolge der unterschiedlichen Werkstoffe bei Temperaturänderung vermieden werden.

Am äußeren Umfang des zweiten äußeren Dehnungskörpers 4 ist ein in axialer Richtung ausgedehnter Distanzkörper 7 ausgebildet, der an einem hierzu ausgebildeten Bund 1.4 am äußeren Fassungsteil 1.1 der Fassungseinheit 1 anliegt. Hierdurch sind die äußeren Enden 6.4 der zweiten Verbindungsglieder 6 axial fest mit dem äußeren, feststehenden Fassungsteil 1.1 verbunden. Alle axialen Verschiebungen der einzelnen Bauteile des Verschiebemechanismus, nämlich des ersten äußeren Dehnungskörpers 2, der ersten Verbindungsglieder 5, des inneren Dehnungskörpers 3 und der zweiten Verbindungsglieder 6 führen daher summiert zu einer Verschiebung des inneren Fassungsteils 1.3 zum äußeren Fassungsteil 1.1.

Der erste und zweite äußere Dehnungskörper 2 und 4 sind ringförmig mit einer möglichst großen radialen Ringbreite ausgebildet, die nach innen hin durch notwendige freie Öffnungen für den inneren Dehnungskörper 3 bzw. einen Strahlengang durch die optische Komponente 8 begrenzt wird. Hierdurch wird eine maximale radiale Steifigkeit der äußeren Dehnungskörper 2, 4 erreicht.

Die beiden äußeren Dehnungskörper 2, 4 sind jeweils aus einem gleichen oder unterschiedlichen Werkstoff mit einem hohen thermischen Ausdehnungskoeffizienten, bevorzugt größer als 1 x 10⁻⁵ K⁻¹, z. B. aus Messing oder Aluminium gefertigt.
Der innere Dehnungskörper 2 ist aus einem Werkstoff mit einem geringeren Ausdehnungskoeffizienten hergestellt, bevorzugt Invar mit 2 x 10⁻⁶ K⁻¹. Hierbei ist jeweils die Differenz der Ausdehnungskoeffizienten des ersten und zweiten äußeren Dehnungskörpers 2, 4 im Vergleich zum Ausdehnungskoeffizienten des inneren Dehnungskörpers 3 entscheidend und sollte möglichst groß sein.

Bei einer Erhöhung der Temperatur dehnen sich der erste und zweite äußere Dehnungskörper 2, 4 radial deutlich stärker aus als der innere Dehnungskörper 3 mit den ersten und zweiten Verbindungsgliedern 5, 6.
Dies führt an den Verbindungsstellen zwischen dem ersten äußeren Dehnungskörper 2 und den äußeren Enden 5.4 der ersten Verbindungsglieder 5 bzw. dem zweiten äußeren Dehnungskörper 4 und den äußeren Enden 6.4 der zweiten Verbindungsglieder 6 zu einer Differenz im Durchmesser der miteinander verbundenen Teile.
Wären die Verbindungsglieder 5 und 6 parallel zueinander angeordnet, d. h. die Anstellwinkel α₅, α₆ wären gleich Null, würde dies im Fall einer Temperaturerhöhung zu erheblichen Zugspannungen führen, ohne dass eine axiale Verschiebung stattfindet. Da die Verbindungsglieder 5, 6 jedoch jeweils um einen Anstellwinkel α₅, α₆ zueinander geneigt sind, wird die radiale Dehnungsdifferenz durch eine Änderung dieser Anstellwinkel α₅, α₆ kompensiert. Die Änderung der Anstellwinkel α₅, α₆ führt zu einer axialen Verschiebung aller Bauteile des Verschiebemechanismus, die auch nur mittelbar mit dem zweiten äußeren Dehnungskörper 4 verbunden sind. Gleichzeitig bewirken die Anstellwinkel α₅, α₆ eine Wegübersetzung der radialen Dehnungsdifferenz in eine deutlich größere axiale Verschiebung.

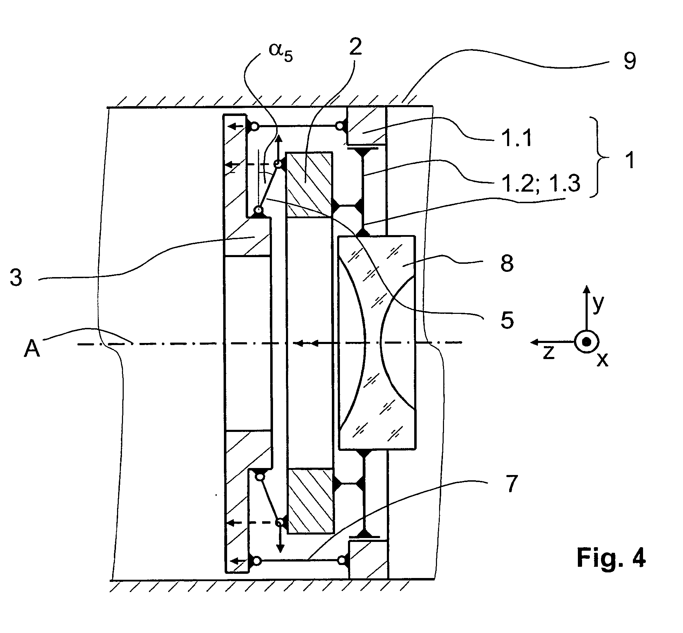

Die wirksamen Dehnungen sind in den Fig. 3 und 4 durch Pfeile dargestellt, die mit einer Volllinie gezeichnet wurden. Diese bewirken Verschiebungen, deren Richtungen durch Pfeile dargestellt sind, die mit Strichlinien gekennzeichnet wurden.

Mit einer beschriebenen Vorrichtung kann bei sehr kleinen Anstellwinkeln α₅, α₆, beispielsweise ca. 7°, ein sehr großes Übersetzungsverhältnis zwischen radialer Dehnung und axialer Verschiebung erreicht werden, während bei größeren Anstellwinkeln α₅, α₆ ein deutlich kleineres Übersetzungsverhältnis entsteht. Bei einem Anstellwinkel von 45° ist das Übersetzungsverhältnis nur noch 1:1.

Geht man davon aus, dass die axiale Dehnung im Verhältnis zur Länge der Verbindungsglieder 5, 6 sehr klein ist, kann von einem annähernd konstanten Übersetzungsverhältnis über den Verschiebeweg ausgegangen werden, das dem Kotangens des jeweiligen Anstellwinkels entspricht.
Die Anstellwinkel α₅, α₆ betragen typischerweise ca. 5° bis ca. 20°, je nach gewünschtem Übersetzungsverhältnis.

Abhängig von dem Temperaturbereich, für den die Vorrichtung eine Kompensation der thermischen Einflüsse auf die optische Komponente 8 bewirken soll, und der Wirkung der optischen Komponente 8 in einem optischen System, wird ein axialer Kompensationsweg je K Temperaturänderung (Kompensationskoeffizient) vorgegeben. Durch Dimensionierung der Durchmesser der Dehnungskörper 2, 3, 4 und die Wahl ihrer Ausdehnungskoeffizienten sowie der Anstellwinkel α₅, α₆ wird der gewünschte Kompensationskoeffizient erreicht. Durch die Anordnung des Verschiebemechanismus vor oder nach der Fassungseinheit 1 in positiver Richtung der optischen Achse, die mit der Achse A zusammenfällt, sind positive bzw. negative Kompensationskoeffizienten einstellbar. Gleiches gilt für die Anstellwinkel α₅, α₆.

Mit dem Ziel, die Baugröße der Vorrichtung in Länge und Durchmesser gering zu halten, erfolgt die Dimensionierung bevorzugt durch die Auswahl der Anstellwinkel α₅ und α₆, wobei die Differenz zwischen den Ausdehnungskoeffizienten des inneren Dehnungskörpers 3 und des ersten bzw. zweiten äußeren Dehnungskörpers 2, 4 möglichst groß sein soll.
Es ist dem Fachmann klar, dass unter einer Ausdehnung sowohl eine positive Ausdehnung, die eine Vergrößerung darstellt, als auch eine negative Ausdehnung, die eine Verkleinerung darstellt, zu verstehen ist.
Unter einer wirksamen Ausdehnung im Sinne der Erfindung ist eine radiale oder axiale Ausdehnung zu verstehen, die eine nicht zu vernachlässigende Verschiebung bewirkt.

Gemäß dem aufgezeigten ersten Ausführungsbeispiel sind die genannten festen Verbindungen innerhalb der Vorrichtung mittels Schrauben hergestellt, womit die Vorrichtung in Verbindung mit dem für die anderen Bauteile verwendeten Werkstoffen EUV-tauglich ist (EUV-tauglich = tauglich für Strahlung im Extrem-Ultraviolett-Bereich).

Das erläuterte, in den Fig. 1, 2 dargestellte erste Ausführungsbeispiel ist auf die Fassung einer Linse ausgelegt. Es ist dem Fachmann klar, dass andere Formen von optischen Komponenten, z. B. die eines Prismas, eine von der kreisrunden Form abweichende Form, zumindest des inneren Umfangs der Fassungseinheit 1, abverlangen. Auch ist es klar, dass die Schraubverbindungen durch andere geeignete, lösbare oder auch nicht lösbare Verbindungen, wie z. B. Rast- oder Schweißverbindungen, ersetzt werden können.

Andere mögliche Ausführungsformen einer erfindungsgemäßen Vorrichtung unterscheiden sich im Wesentlichen in der Anzahl der äußeren und inneren Dehnungskörper 2, 3, 4.
Zur Erläuterung sollen die Fig. 3 und 4 dienen, wobei Fig. 3 eine Prinzipskizze für die ausführlich beschriebene Ausführungsform der Vorrichtung gemäß dem ersten Ausführungsbeispiel zeigt und Fig. 4 eine Prinzipskizze für ein zweites Ausführungsbeispiel ist, bei dem der Verschiebemechanismus aus nur einem äußeren Dehnungskörper 2 und einem inneren Dehnungskörper 3 besteht.

Das erste Bauteil eines Verschiebemechanismus, unabhängig von der Anzahl der Dehnungskörper 2, 3, 4, welches auch ein erstes freies Ende des Verschiebemechanismus darstellt, wird stets durch einen ersten äußeren Dehnungskörper 2 gebildet, der bevorzugt aus einem gleichen Werkstoff besteht wie die Fassungseinheit 1, sodass auf einem gleichen Radius keine Dehnungsunterschiede entstehen. Damit können das erste Bauteil und die Fassungseinheit 1 starr miteinander verbunden werden (Fig. 1 und Fig. 2).
Insbesondere für den Fall, dass der Verschiebemechanismus mehrere äußere Dehnungskörper 2, 4 umfasst und das letzte Bauteil, welches auch ein zweites freies Ende des Verschiebemechanismus darstellt, ein äußerer Dehnungskörper 4 ist, wird dieser vorteilhaft aus einem gleichen Werkstoff wie die Fassungseinheit 1 hergestellt, um eine spannungsfreie feste Verbindung zwischen dem letzten Bauteil und der Fassungseinheit 1 herstellen zu können (Fig. 3).

Das letzte Bauteil kann gemäß dem zweiten Ausführungsbeispiel auch ein innerer Dehnungskörper 3 sein. In diesem Fall muss das letzte Bauteil über eine radial bewegliche Verbindung mit der Fassungseinheit 1 verbunden werden, um Radialspannungen abzufangen (Fig. 4).

Für Ausführungen mit zusätzlichen äußeren und inneren Dehnungskörpem 2, 3, 4 werden diese miteinander analog den aufgezeigten zwei Ausführungsbeispielen kaskadenartig miteinander verbunden. Derartige Ausführungen können z. B. von Interesse sein, wenn ein größerer Verschiebeweg realisiert werden soll.

Die aufgezeigten Ausführungsbeispiele zeigen Vorrichtungen, bei denen die Bauteile des Verschiebemechanismus und auch der Fassungseinheit 1 rotationssymmetrisch sind, was sich insbesondere als vorteilhaft erweist, wenn die optische Komponente 8 rotationssymmetrisch ist, wie das z. B. bei einer Linse in der Regel gegeben ist.

Die Bauteile des Verschiebemechanismus und/oder der Fassungseinheit 1 können aber auch z. B. die Form eines achssymmetrischen, gleichseitigen Vielecks haben.

### Aufstellung der verwendeten Bezugszeichen

1 Fassungseinheit
   1.1 äußeres Fassungsteil
   1.2 Verbindungsteil
   1.3 inneres Fassungsteil
   1.4 Bund
2 erster äußerer Dehnungskörper
   2.1 erster Außenring
   2.2 zweiter Außenring
3 innerer Dehnungskörper
   3.1 erster Innenring
   3.2 zweiter Innenring
4 zweiter äußerer Dehnungskörper
   4.1 dritter Außenring
   4.2 vierter Außenring
5 erstes Verbindungsglied
   5.1 inneres Festkörpergelenk eines ersten Verbindungsglieds
   5.2 Steg eines ersten Verbindungsglieds
   5.3 äußeres Festkörpergelenk eines ersten Verbindungsglieds
   5.4 äußeres Ende eines ersten Verbindungsglieds
6 zweites Verbindungsglied
   6.1 inneres Festkörpergelenk eines zweiten Verbindungsglieds
   6.2 Steg eines zweiten Verbindungsglieds
   6.3 äußeres Festkörpergelenk eines zweiten Verbindungsglieds
   6.4 äußeres Ende eines zweiten Verbindungsglieds
7 Distanzkörper
8 optische Komponente
9 Gehäuse eines optischen Systems
A Achse
α₅ Anstellwinkel der ersten Verbindungsglieder 5
α₆ Anstellwinkel der zweiten Verbindungsglieder 6

## Patentansprüche

1. Vorrichtung zur temperaturabhängigen axialen Verschiebung einer optischen Komponente (8), mit einer feststehenden Halterung, die eine Achse (A) aufweist, und einer entlang dieser Achse (A) verschiebbaren, die optische Komponente (8) tragenden Fassung, wobei die feststehende Halterung und die verschiebbare Fassung über einen Verschiebemechanismus miteinander verbunden sind, der aus ringförmigen Dehnungskörpem mit unterschiedlichen thermischen Ausdehnungskoeffizienten besteht, **dadurch gekennzeichnet,**
**dass** eine monolithische Fassungseinheit (1) vorhanden ist, mit einem äußeren Fassungsteil (1.1), das die feststehende Halterung darstellt, und einem inneren Fassungsteil (1.3), das die Fassung für die optische Komponente (8) bildet, wobei die Fassungseinheit (1) ein geschlitztes monolithisches Bauteil ist, dass durch Schlitze begrenzt in das äußere Fassungsteil (1.1), das innere Fassungsteil (1.3) und radial zwischen den Schlitzen gebildete Verbindungsteile (1.2) unterteilt ist,
**dass** die ringförmigen Dehnungskörper wenigstens ein äußerer Dehnungskörper (2, 4) und wenigstens ein innerer Dehnungskörper (3) sind und die äußerem Dehnungskörper aus einem Werkstoff mit einem vergleichsweise höheren thermischen Ausdehnungskoeffizienten sowie die inneren Dehnungskörper (3) aus einem Werkstoff mit einem vergleichsweise niedrigeren thermischen Ausdehnungskoeffizienten bestehen,
**dass** jeweils einer der äußeren Dehnungskörper (2, 4) und einer der inneren Dehnungskörper (3) über eine Anzahl sternförmig angeordneter Verbindungsglieder (5, 6) miteinander verbunden sind, und
**dass** die Verbindungsglieder (5, 6) jeweils unter einem vorgegebenen Anstellwinkel (α₅, α₆) zu einer Senkrechten zur Achse (A) angeordnet sind.

2. Vorrichtung nach Anspruch 1, **dadurch gekennzeichnet,**
**dass** die äußeren Dehnungskörper (2, 4) ein erster äußerer Dehnungskörper (2) und ein zweiter äußerer Dehnungskörper (4) sind sowie genau ein innerer Dehnungskörper (3) vorhanden ist, dass der innere Dehnungskörper (3) über eine Anzahl sternförmig angeordneter erster Verbindungsglieder (5) mit dem ersten äußeren Dehnungskörper (2), der mit dem inneren Fassungsteil (1.3) in Verbindung steht, verbunden ist, sowie über eine Anzahl sternförmig angeordneter zweiter Verbindungsglieder (6) mit dem zweiten äußeren Dehnungskörper (4), der mit dem äußeren Fassungsteil (1.1) in Verbindung steht, verbunden ist.

3. Vorrichtung nach Anspruch 1 oder 2, **dadurch gekennzeichnet,**
**dass** der innere Dehnungskörper (3) und die Verbindungsglieder (5, 6) aus einem Werkstoff mit einem gleichen thermischen Ausdehnungskoeffizienten bestehen.

4. Vorrichtung nach Anspruch 3, **dadurch gekennzeichnet,**
**dass** der innere Dehnungskörper (3) aus einem ersten Innenring (3.1) und einem mit diesem fest verbundenen zweiten Innenring (3.2) besteht, und der erste Innenring (3.1) mit den ersten Verbindungsgliedern (5) und der zweite Innenring (3.2) mit den zweiten Verbindungsgliedern (6) jeweils durch ein monolithisches Bauteil gebildet sind.

5. Vorrichtung nach Anspruch 3, **dadurch gekennzeichnet,**
**dass** die Verbindungsglieder (5, 6) jeweils aus einem inneren Festkörpergelenk (5.1, 6.1), einem Steg (5.2, 6.2), einem äußeren Festkörpergelenk (5.3, 6.3) sowie einem äußeren Ende (5.4, 6.4) gebildet sind.

6. Vorrichtung nach Anspruch 5, **dadurch gekennzeichnet,**
**dass** der erste und der zweite äußere Dehnungskörper (2, 4) jeweils aus zwei Außenringen (2.1, 2.2, 4.1, 4.2) bestehen, zwischen denen die äußeren Enden (5.4, 6.4) der Verbindungsglieder (5, 6) über eine Schraubverbindung geklemmt sind.

7. Vorrichtung nach Anspruch 1, **dadurch gekennzeichnet,**
**dass** der thermische Ausdehnungskoeffizient des Werkstoffes des inneren Dehnungskörpers (3) und der Verbindungsglieder (5, 6) kleiner als 1 x 10⁻⁵ K⁻¹ ist, wodurch der innere Dehnungskörper (3) bei Temperaturveränderungen keine spürbare Ausdehnung bzw. Schrumpfung erfährt.

8. Vorrichtung nach Anspruch 1, **dadurch gekennzeichnet,**
**dass** der Werkstoff des inneren Dehnungskörpers (3) Invar ist.

9. Vorrichtung nach Anspruch 1, **dadurch gekennzeichnet,**
**dass** der Werkstoff der äußeren Dehnungskörper (2, 4) einen thermischen Ausdehnungskoeffizienten von größer 1 x 10⁻⁵ K⁻¹ hat, wodurch die äußeren Dehnungskörper (2, 4) bei Temperaturveränderungen eine spürbare radiale Ausdehnung erfahren.

10. Vorrichtung nach Anspruch 9, **dadurch gekennzeichnet,**
**dass** der Werkstoff der äußeren Dehnungskörper (2, 4) Messing, Stahl oder Aluminium ist.

11. Vorrichtung nach Anspruch 2, **dadurch gekennzeichnet,**
**dass** am äußeren Umfang des zweiten äußeren Dehnungskörpers (4) ein in axialer Richtung ausgedehnter Distanzkörper (7) ausgebildet ist, über den der zweite Dehnungskörper (4) an einem ausgebildeten Bund (1.4) am äußeren Teil (1.1) der Fassungseinheit (1) anliegt, wodurch der zweite äußere Dehnungskörper (4) mit dem äußeren Fassungsteil (1.1) verbunden ist.

12. Vorrichtung nach Anspruch 1, **dadurch gekennzeichnet,**
**dass** der Werkstoff der Fassungseinheit (1) einen gleichen thermischen Ausdehnungskoeffizienten aufweist, wie der Werkstoff der äußeren Dehnungskörper (2, 4).

## Claims

1. A device for the temperature-dependent axial movement of an optical component (8), the device comprising a fixed holder having an axis (A) and a mount supporting the optical component (8), the mount being movable along the axis (A), said fixed holder and said movable mount being connected to each other by a moving mechanism consisting of annular expansion elements having different coefficients of thermal expansion, **characterised**
**in that** a monolithic mounting unit (1) is present including an outer mounting part (1.1) forming the fixed holder and an inner mounting part (1.3) forming the mount for the optical component (8), said mounting unit (1) being a slotted monolithic part which, limited by slots, is divided into the outer mounting part (1.1), the inner mounting part (1.3) and connecting parts (1.2) which are formed radially between the slots,
**in that** the annular expansion elements comprise at least one external expansion element (2, 4) and at least one internal expansion element (3), the external expansion elements consisting of a material with a comparatively higher coefficient of thermal expansion and the internal expansion elements (3) consisting of a material having a comparatively lower coefficient of thermal expansion,
**in that** a respective one of the external expansion elements (2, 4) is connected to a respective one of the internal expansion elements (3) by a plurality of connecting links (5, 6) disposed in a star-shaped formation, and
**in that** each connecting link (5, 6) is disposed at a prescribed pitch angle (α₅, α₆) to a line perpendicular to the axis (A).

2. The device according to claim 1, **characterised**
**in that** the external expansion elements (2, 4) comprise a first external expansion element (2) and a second external expansion element (4) and there is exactly one internal expansion element (3),
**in that** the internal expansion element (3) is connected to the first external expansion element (2) by a number of first connecting links (5) disposed in a star-shaped formation, said first external expansion element (2) being connected to the inner mounting part (1.3), and is connected to the second external expansion element (4) by a number of second connecting links (6) disposed in a star-shaped formation, said second external expansion element (4) being connected to the outer mounting part (1.1).

3. The device according to claim 1 or 2, **characterised in that** the internal expansion element (3) and the connecting links (5, 6) consist of a material having a same coefficient of thermal expansion.

4. The device according to claim 3, **characterised in that** the internal expansion element (3) consists of a first inner ring (3.1) and a second inner ring (3.2) fixedly connected to each other, the first inner ring (3.1) and the first connecting links (5) and the second inner ring (3.2) and the second connecting links (6) being formed by respective monolithic parts.

5. The device according to claim 3, **characterised in that** the connecting links (5, 6) are each formed of an inner solid joint (5.1, 6.1), a strut (5.2, 6.2), an outer solid joint (5.3, 6.3) and an outer end (5.4, 6.4).

6. The device according to claim 5, **characterised in that** the first and second external expansion elements (2, 4) each consist of two respective outer rings (2.1, 2.2, 4.1, 4.2) and the outer ends (5.4, 6.4) of the connecting links (5, 6) are clamped between the outer rings (2.1, 2.2, 4.1, 4.2) by a screwed connection.

7. The device according to claim 1, **characterised in that** the coefficient of thermal expansion of the material of the internal expansion element (3) and of the connecting links (5, 6) is smaller than 1 x 10⁻⁵ K⁻¹, so that changes in temperature do not cause the internal expansion element (3) to notably expand or retract.

8. The device according to claim 1, **characterised in that** the material of the internal expansion element (3) is Invar.

9. The device according to claim 1, **characterised in that** the material of the external expansion elements (2, 4) has a coefficient of thermal expansion of greater than 1 x 10⁻⁵ K⁻¹, so that changes in temperature cause the external expansion elements (2, 4) to undergo a noticeable radial expansion.

10. The device according to claim 9, **characterised in that** the material of the external expansion elements (2, 4) is brass, steel or aluminium.

11. The device according to claim 2, **characterised in that** a spacer element (7) extending in an axial direction is disposed at the outer circumference of the second external expansion element (4), said spacer element (7) causing the second expansion element (4) to abut against a collar (1.4) of the outer mounting part (1.1) of the mounting unit (1) so as to connect the second external expansion element (4) to the outer mounting part (1.1).

12. The device according to claim 1, **characterised in that** the material of the mounting unit (1) has the same coefficient of thermal expansion as the material of the external expansion elements (2, 4).

## Revendications

1. Dispositif pour le déplacement axial d'un composant optique (8) en fonction de la température, ledit dispositif comprenant un support fixe, qui présente un axe (A), et une monture, qui porte le composant optique (8) et qui est déplaçable selon l'axe (A), ledit support fixe et ladite monture déplaçable étant reliés par un mécanisme de déplacement qui est constitué d'éléments de dilatation annulaires ayant différents coefficients de dilatation thermique, **caractérisé en ce qu'**il y a un ensemble de monture monolithique (1) comprenant une pièce de monture externe (1.1), qui constitue le support fixe, et une pièce de monture interne (1.3), qui constitue la monture pour le composant optique (8), ledit ensemble de monture (1) étant un composant monolithique fendu qui, délimitée par des fentes, est divisée en la pièce de monture externe (1.1), la pièce de monture interne (1.3) et des éléments de raccordement (1.2) réalisés radialement entre lesdites fentes,
**en ce que** les éléments de dilatation annulaires comprennent au moins un élément de dilatation extérieur (2, 4) et au moins un élément de dilatation intérieur (3), les éléments de dilatation extérieurs consistant d'un matériau ayant un coefficient de dilatation thermique comparativement supérieur et les éléments de dilatation intérieurs (3) consistant d'un matériau ayant un coefficient de dilatation thermique comparativement inférieur,
**en ce que** l'un des éléments de dilatation extérieurs (2, 4) est relié à un élément de dilatation (3) respectif par plusieurs éléments de jonction (5, 6) disposés en étoile, et
**en ce que** chaque élément de jonction (5, 6) est disposé sous un angle d'attaque déterminé (α₅, α₆) par rapport à une ligne perpendiculaire à l'axe (A).

2. Dispositif selon la revendication 1, **caractérisé**
**en ce que** les éléments de dilatation extérieurs (2, 4) comprennent un premier élément de dilatation extérieur (2) et un deuxième élément de dilatation extérieur (4) et en ce qu'il y a exactement un élément de dilatation intérieur (3),
**en ce que** l'élément de dilatation intérieur (3) est relié par plusieurs premiers éléments de jonction (5) disposés en étoile au premier élément de dilatation extérieur (2), ce dernier étant relié à la pièce de monture interne (1.3), et qu'il est relié par plusieurs deuxièmes éléments de jonction (6) disposés en étoile au deuxième élément de dilatation extérieur (4), ce dernier étant relié à la pièce de monture externe (1.1).

3. Dispositif selon la revendication 1 ou 2, **caractérisé en ce que** l'élément de dilatation intérieur (3) et les éléments de jonction (5, 6) consistent d'un matériau ayant un même coefficient de dilatation thermique.

4. Dispositif selon la revendication 3, **caractérisé en ce que** l'élément de dilatation intérieur (3) est constitué d'une première bague intérieure (3.1) et d'une deuxième bague intérieure (3.2) montée fixe sur cette première, la première bague intérieure (3.1) avec les premiers éléments de jonction (5) et la deuxième bague intérieure (3.2) avec les deuxièmes éléments de jonction (6) étant constitués respectivement par un seul composant monolithique.

5. Dispositif selon la revendication 3, **caractérisé en ce que** chacun des éléments de jonction (5, 6) est constitué par une charnière intégrale intérieure respective (5.1, 6.1), une âme respective (5.2, 6.2), une charnière intégrale extérieure respective (5.3, 6.3) et une extrémité extérieure respective (5.4, 6.4).

6. Dispositif selon la revendication 5, **caractérisé en ce que** chacun des premiers et deuxièmes éléments de dilatation extérieurs (2, 4) est constitué de deux bagues extérieures respectives (2.1, 2.2, 4.1, 4.2) entre lesquelles les extrémités extérieures (5.4, 6.4) des éléments de jonction (5, 6) sont serrées par un raccord vissé.

7. Dispositif selon la revendication 1, **caractérisé en ce que** le coefficient de dilatation thermique du matériau utilisé pour l'élément de dilatation intérieur (3) et pour les éléments de jonction (5, 6) est inférieur à 1 x 10⁻⁵ K⁻¹, de sorte que des variations de température n'amènent pas de dilatation ou contraction appréciable de l'élément de dilatation intérieur (3).

8. Dispositif selon la revendication 1, **caractérisé en ce que** le matériau utilisé pour l'élément de dilatation intérieur (3) est l'Invar.

9. Dispositif selon la revendication 1, **caractérisé en ce que** le matériau utilisé pour les éléments de dilatation extérieurs (2, 4) présente un coefficient de dilatation thermique supérieur à 1 x 10⁻⁵ K⁻¹, de sorte que des variations de température amènent une dilatation radiale appréciable des éléments de dilatation extérieurs (2, 4).

10. Dispositif selon la revendication 9, **caractérisé en ce que** le matériau utilisé pour les éléments de dilatation extérieurs (2, 4) est le laiton, l'acier ou l'aluminium.

11. Dispositif selon la revendication 2, **caractérisé en ce qu'**une entretoise (7) s'étendant en direction axiale est disposée au niveau de la circonférence extérieure du deuxième élément de dilatation extérieur (4), ladite entretoise (7) faisant buter le deuxième élément de dilatation (4) contre un collier (1.4) de la pièce de monture externe (1.1) de l'ensemble de monture (1), reliant de cette manière le deuxième élément de dilatation extérieur (4) à la pièce de monture externe (1.1).

12. Dispositif selon la revendication 1, **caractérisé en ce que** le matériau utilisé pour l'ensemble de monture (1) présente un même coefficient de dilatation thermique que le matériau utilisé pour les éléments de dilatation extérieurs (2, 4).
